# EUROPEAN PATENT SPECIFICATION

(11) **EP 1 254 427 B1**
(45) Date of publication and mention of the grant of the patent: **28.07.2004**
(21) Application number: 01902501.4
(22) Date of filing: 29.01.2001
(51) Int. Cl.: G06K 19/06

(54) **AUTHENTICATING TEXTILE BASED ITEMS**
AUTHENTIFIZIERUNG TEXTILWARE
AUTHENTIFICATION D'ARTICLES A BASE TEXTILE

(30) Priority: 29.01.2000 GB 0001986; 04.07.2000 GB 0016377; 02.08.2000 GB 0018848; 16.08.2000 GB 0020091; 11.12.2000 GB 0030111
(43) Date of publication of application: 06.11.2002
(73) Proprietor: Reed, Christopher, Harrogate HG3 1LD (GB)
(72) Inventor: Reed, Christopher, Harrogate HG3 1LD (GB)
(74) Representative: Harrison Goddard Foote
(86) International application number: PCT/GB2001/000341
(87) International publication number: WO 2001/055961

(56) References cited:
- EP-A- 0 919 650
- WO-A-87/04200

## Description

### Field of the invention

This invention relates to the authentication of textile based garments. The term "authentication" refers broadly to the establishment that a garment has come from a legitimate source, normally the originator of the garment design or some other party to whom rights to produce the garment have been given.

### Background to the invention

A serious problem for textile manufacturers is that textile designs are easily copied. By way of example. a large retailer might order from the manufacturer, who owns the rights in a textile design, a number of garments incorporating the design. It is then a simple matter for the retailer to pass one of the garments to another manufacturer who can easily copy the garment including the design and then supply the retailer with further items, often at a lower price. Indeed, the textile item can be so closely copied that the original manufacturer may not be able to distinguish between the genuine item and the copy.

There is a need for a simple and certain method of being able to establish the authenticity of a garment. that is to say, that the garment has been manufactured by the appropriate party and not by a copier.

It is known to apply to a garment in a post-manufacturing procedure a marker, such as a manufacturer's logo or trade mark, the marker being applied by means of a printing process. It is also known to apply labels, by sewing or in some other way, to the manufactured garment. Such "security" measures are easily circumvented by applying the appropriate marker or label to unauthorised copies of the garment.

EP-A-0 919 650 discloses the use of tapes or labels, for application to garments. The tapes or labels carry information which may be read using light outside the visible region.

WO-A-87 04 200 discloses a method of applying a bar code to a textile item such as bed linen, hankerchiefs, the bars of the bar code being made from black threads woven into a white thread background.

### Statements of the invention

A method of producing a textile based garment whose authenticity is capable of being ascertained, the method comprising applying to structural elements of the textile based garment, prior to the manufacture of the garment, sufficient of one or more components arranged in a coded sequence, which one or more components cause an alteration to the response of the garment to incident electromagnetic radiation wherein said alteration of response is only to incident radiation lying outside the visible range whereby said coded sequence can be determined in order to ascertain the authenticity of said textile based garment.

The term "structural elements" means fibres, yarns or the like which form the body of the textile based garment.

Preferably the coded sequence is in the form of the well known bar-code, or an equivalent thereof.

Preferably the coded sequence is repeated across at least a portion of the garment.

The one or more components are such that electromagnetic radiation outside the visible range is required to elicit the above-mentioned response. The response may be to any suitable electromagnetic radiation, and the or each component may be selected from, for instance, an IR absorber, an IR emitter, a fluorescent material or a UV absorber.

The present invention also provides a method of producing a textile based garment whose authenticity is capable of being ascertained, the method comprising applying to structural elements of the textile based garment, prior to the manufacture of the garment, sufficient of one or more components arranged in a coded sequence, wherein said one or more components is subjected to treatment subsequent to the manufacture of the garment to cause said one or more components to become capable of causing an alteration to the response of the garment to incident electromagnetic radiation and wherein said alteration of response is only to incident radiation lying outside the visible range whereby said coded sequence can be determined in order to ascertain the authenticity of said textile based garment.
By way of examples, such post-manufacture treatment may be chemical, heat, or by electromagnetic radiation.

The present invention also provides a textile based garment whose authenticity is capable of being ascertained, the garment having located on structural elements thereof sufficient of one or more components arranged in a coded sequence which one or more components alter the response of the garment to incident electromagnetic radiation, wherein said alteration of response is only to incident radiation lying outside the visible range whereby said coded sequence can be determined in order to ascertain the authenticity of said textile based garment. In other words, the one or more components are typically applied to the fibres, yarns and the like which form the body of the textile based garment before the garment is manufactured.

In addition, the present invention provides a method of establishing the authenticity of a textile based garment according to the invention, the method comprising causing electromagnetic radiation outside the visible range to be incident on at least that part of the garment where the or each component is supposed to be located and ascertaining whether the response to said electromagnetic radiation is indicative of that for an authentic garment.

Apparatus for carrying out the methods of the present invention may comprise means for scanning the item with electromagnetic radiation lying outside the visible range, means receptive to radiation transmitted or reflected by said item as a result of said scanning and means for displaying data indicative of the presence and/or arrangement in the item of said one or more components.

The scanning means may be any suitable instrument, for example, a microscope, a camera or a spectrophotometer. An example of the latter is a Fourier Transform Infra-Red (FTIR) spectrophotometer

Accordingly, the present invention is concerned with the addition of components to a garment which will alter the character of incident electromagnetic radiation in a manner different from the character of electromagnetic radiation which is incident on a garment not including such added components. The characteristic of the electromagnetic radiation which is altered may be, for instance, its reflectance or its absorbance.

Any components added to a garment may be a material which is sensitive to a narrow band width of radiation so that it reflects or otherwise responds to incident electromagnetic radiation at one or more specific wavelengths within a specific wavelength range.

As indicated above, in one embodiment of the present invention one or more components may be incorporated into the garment which will, in response to scanning by appropriate equipment, give a signal corresponding to a predetermined coded sequence. This is similar to the use of the well known bar-code system used on articles to indicate price, origin and/or other relevant information.

### Detailed description of the invention

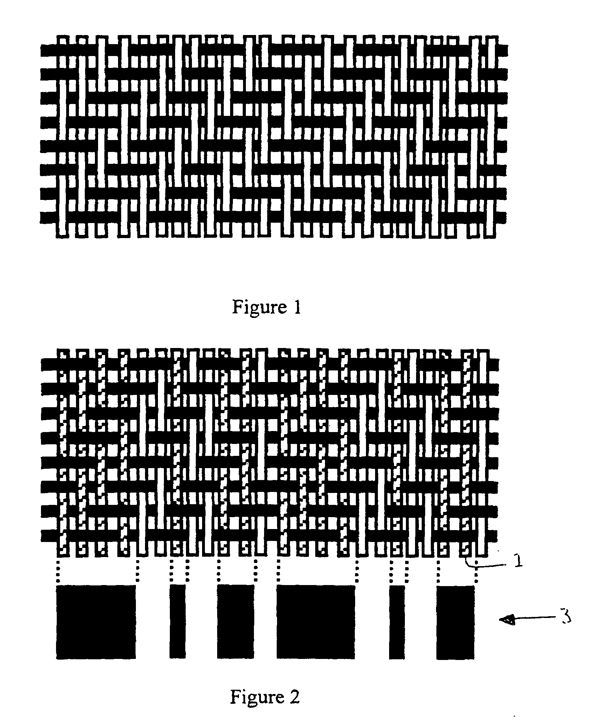

The invention will now be further described including reference to non-limiting examples and with further reference to the accompanying drawings which consist of Figures 1 to 6.

The component(s) which may be incorporated into the garment may be any suitable material(s) which has (have) an appropriate effect on incident electromagnetic radiation. Examples of appropriate effects are fluorescence, phosphorescence, photochromism or halochromism.

Examples of suitable materials are IR and UV absorbing materials. Specific materials include the following:
2-[2-[2-chloro-3-[2-[1,3-dihydro-1,3,3-trimethyl-2H-indol-2-ylidene)-ethylidene]-1-cyclohexen-1-yl]ethenyl]-1,3,3-trimethyl-3H-indolium perchlorate;
1-ethyl-4-[7-(1-ethyl-4(1H)-quinolinylidene)-1,3,5-heptatrienyl]quinoloium iodide;
bis(dithiobenzil)nickel;
1',3'-dihydro-1',3',3'-trimethyl-6-nitrospiro[2H-1-benzopyran-2,2'-[2H] indole; and
2-[2-[2-chloro-3-[2-(3-ethyl-3H-benzthiazol-2-ylidene)-ethylidene]-1-cyclohexen-1-yl]ethenyl-3-ethyl benzthiazolium perchloxate.

Preferably, a component to be incorporated is applied to a particular portion of the textile and, in the case of fabrics, preferably to particular yarns within the fabric. Such a component may be incorporated into the fibres or yarns during their manufacture. Alternatively the component may be applied to the fibres or yarns subsequent to their manufacture.

For instance, the yarns may be made from polyester fibre which is, in turn, manufactured from raw polyester. The raw polyester may be formed into "chips" (known as "POY"), the component added and the chips extruded to form staple or filament polyester fibre. The fibre is then converted into yarn by the process of "spinning" and may be further processed by means of, for instance, air jet apparatus to form "texturised" polyester yarn.

The yarns are then made up into a fabric or other textile structure by, for instance, weaving, knitting or some other process. The resultant textile structure may be printed, dyed or otherwise processed and formed into the final garment, which will carry the yarns to which the one or more components have been added.

Figure 1 of the accompanying drawings illustrates a 2/2 twill woven fabric showing both the intersecting warp and weft yarns. Figure 2 of the accompanying drawings shows a similar woven fabric construction in which certain yarns 1 include an added component. Figure 2 also shows the resultant "bax-code" 3 produced by scanning the fabric with appropriate electromagnetic radiation. In the fabric shown in Figure 2 the bar-code repeats over a series of twelve warp threads (those yarns running in the vertical direction in Figure 2), two full repeats of the bar-code being shown

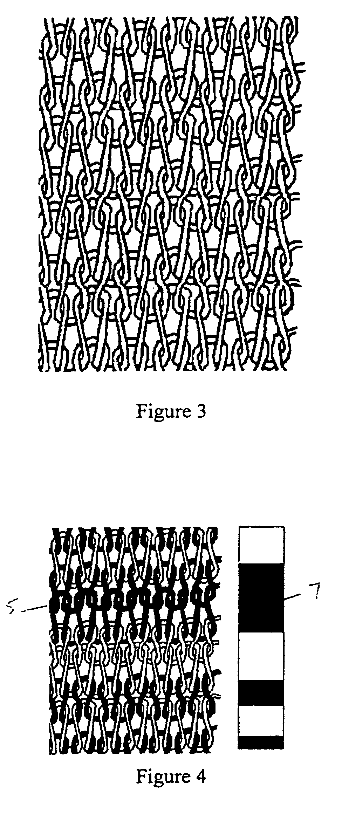

Figure 3 of the accompanying drawings illustrates a plain weft knitted fabric where the interlinking between the loops of successive yarns can be seen. Figure 4 of the accompanying drawings shows a similar fabric but with the dark yarns 5 having incorporated therein the added component. The resultant "bar-code" 7 is also shown in Figure 4.

The number of possible "codes" is limited only by the textile constructions, for example, the number of feeds on a knitting machine or the number of yarns in the warp section of a woven fabric. In woven fabrics, use can also be made of the weft yarns in creating codes and, indeed, both the warp and the weft yarns may be used.

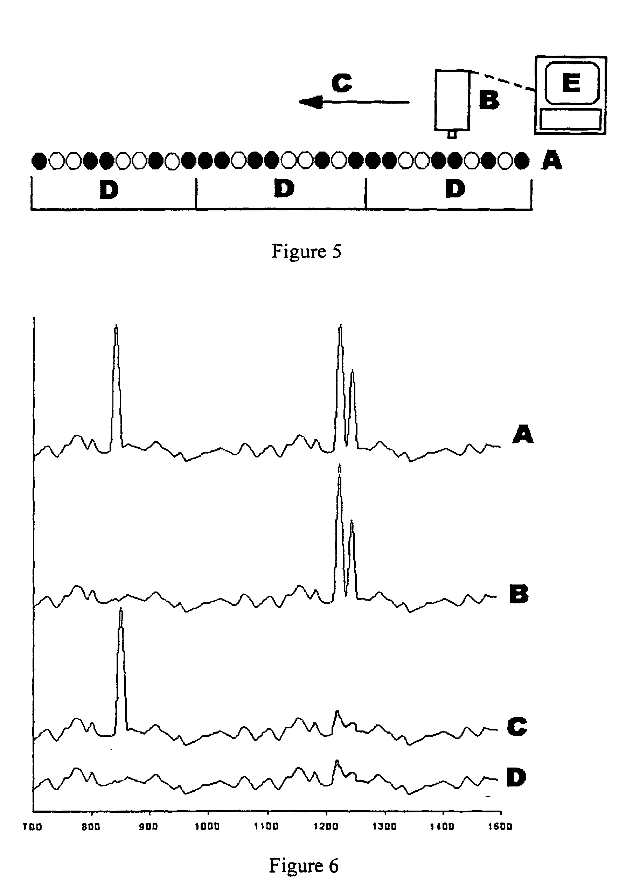

In order to establish whether a garment is a genuine one, an appropriate device is used for causing electromagnetic radiation to be incident upon the garment and for measuring the property or characteristic of the resultant radiation, for instance, its reflectance or absorbance. An example of such device is an infra-red spectrophotometer. The use of such an instrument will now be described in connection with a particular embodiment of the invention in which one or more components are arranged in the garment in a coded manner, in particular, in a manner analogous to a bar-code. Accordingly, the scanning apparatus, which is illustrated in Figure 5 of the accompanying drawings, may be arranged in a manner similar to that used at the point of sale in retail outlets to read the bar-codes on products being sold.

Referring to Figure 5, there is shown a cross-section of a garment A with the bar-code within the yarns being indicated, three repeats, indicated by D, being represented in Figure 5. The apparatus includes a scanner head B which is movable in direction C relative to the fabric A. Scanner head B relays information to a computer E, or other analysis system, which decodes the scanner information and verifies the authenticity of the garment.

Figure 6 of the accompanying drawings illustrates infra-red spectra obtained from. scarmed yarns, the x-axis representing the wavelength of the radiation and the y-axis the absorbance. Spectrum A is obtained from a yarn including two added components, one having a characteristic peak at a wavelength of 840nm and the second component having a characteristic dual peak at 1220nm and 1240nm.

Spectrum B is for a similar yarn but with the first component omitted. Spectrum C shows again the same yarn but with the second component omitted and Spectrum D is for the same yarn without either component being present.

The detection of the inclusion of one or more components in successive measurements within the garment produces the bar-code and comparison with the known and genuine data for an authentic garment provides the means of authentication.

It should be appreciated that the bar-code incorporated in the garment may indicate various types of information including, for instance, the date and time of manufacture of the fabric, the product owner and the manufacturer. Any garment can be readily checked to see if it carries the information which is appropriate for the genuine articles. The codes may be changed frequently and, as a result, it is impossible for a would-be copier to know which bar-codes to apply to a batch of garments, even if he were able to incorporate appropriate components into the yarns which he uses.

The added component may or may not have an immediate effect on instant electromagnetic radiation. It may become detectable at a time subsequent to that at which the component was first applied. Some form of secondary treatment may be used to render the component detectable to appropriate radiation. The various steps in such a procedure maybe as follows:-

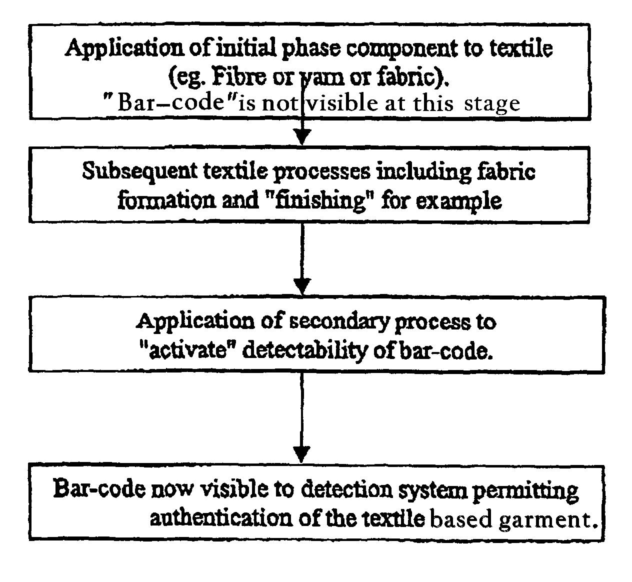

The component within the fabric may be "activated" by various treatments, according to the nature of the fabric. Examples are electromagnetic radiation (ultra-violet, visible or infra-red), or treatment by chemical and/or heat. The effect on incident electromagnetic radiation may therefore only be detected after this subsequent treatment in order that the authenticity of the garment may be verified. By way of example the component incorporated in the yarns may be trithiocyanuric acid and the textile product may be subjected to after treatment with 7-fluor-nitro-benzoxa-1,3-diazole in order to render the component visible to appropriate radiation. In a further example, the incorporated material is 2-2naphthol and the secondary treatment is with 4-nitrobenzene diazonium chloride.

## Claims

1. A method of producing a textile based garment whose authenticity is capable of being ascertained, the method comprising applying to structural elements (1) of the textile based garment, prior to the manufacture of the garment, sufficient of one or more components (3) arranged in a coded sequence, which one or more components cause an alteration to the response of the garment to incident electromagnetic radiation wherein said alteration of response is only to incident radiation lying outside the visible range whereby said coded sequence can be determined in order to ascertain the authenticity of said textile based garment.

2. A method according to Claim 1, wherein the coded sequence is in the form of a bar-code or an equivalent thereof.

3. A method according to Claim 1 or Claim 2, wherein the coded sequence is repeated across at least a portion of the garment.

4. A method according to any of the preceding claims, wherein the or each component is selected from an IR absorber, an IR emitter, a fluorescent material or a UV absorber.

5. A method of producing a textile based garment whose authenticity is capable of being ascertained, the method comprising applying to structural elements (1) of the textile based garment, prior to the manufacture of the garment, sufficient of one or more components (3) arranged in a coded sequence, wherein said one or more components is subjected to treatment subsequent to the manufacture of the garment to cause said one or more components to become capable of causing an alteration to the response of the garment to incident electromagnetic radiation and wherein said alteration of response is only to incident radiation lying outside the visible range whereby said coded sequence can be determined in order to ascertain the authenticity of said textile based garment.

6. A method according to Claim 5, wherein said treatment is chemical, heat or by electromagnetic radiation.

7. A textile based garment whose authenticity is capable of being ascertained, the garment having located on structural elements (1) thereof sufficient of one or more components (3) arranged in a coded sequence, which one or more components alter the response of the garment to incident electromagnetic radiation, wherein said alteration of response is only to incident radiation lying outside the visible range whereby said coded sequence can be determined in order to ascertain the authenticity of said textile based garment.

8. A method of establishing the authenticity of a textile based garment according to Claim 7, the method comprising causing electromagnetic radiation outside the visible range to incident on at least that part of the garment where the or each component is supposed to be located and ascertaining whether the response to said electromagnetic radiation is indicative of that for an authentic garment.

## Patentansprüche

1. Verfahren zum Herstellen eines textilen Kleidungsstücks, dessen Authentizität feststellbar ist, das Verfahren umfassend: vor der Herstellung des Kleidungsstücks das Anbringen von einer oder mehreren ausreichenden Komponente(n) (3), die in einer codierten Sequenz an Strukturelementen (1) des textilen Kleidungsstücks angeordnet sind, welche eine oder mehrere Komponente(n) (3) eine Veränderung der Reaktion des Kleidungsstücks auf einfallende elektromagnetische Strahlung bewirken, wobei diese Veränderung der Reaktion nur bei einfallender Strahlung stattfindet, die außerhalb des sichtbaren Bereiches liegt, wodurch die codierte Sequenz bestimmt werden kann, um die Authentizität des textilen Kleidungsstücks festzustellen.

2. Verfahren nach Anspruch 1, bei dem die codierte Sequenz die Form eines Strichcodes oder eines Äquivalents davon hat.

3. Verfahren nach Anspruch 1 oder 2, bei dem die codierte Sequenz über mindestens einem Teil des Kleidungsstücks wiederholt ist.

4. Verfahren nach einem der vorhergehenden Ansprüche, bei dem die Komponente oder jede Komponente unter einem IR-Absorber, einem IR-Strahler, einem fluoreszierenden Material oder einem UV-Absorber ausgewählt ist.

5. Verfahren zum Herstellen eines textilen Kleidungsstücks, dessen Authentizität feststellbar ist, das Verfahren umfassend: vor der Herstellung des Kleidungsstücks das Anbringen von einer oder mehreren ausreichenden Komponente(n) (3), die in einer codierten Sequenz an Strukturelementen (1) des textilen Kleidungsstücks angeordnet sind, wobei eine oder mehrere Komponenten nach der Herstellung des Kleidungsstücks einer Behandlung unterzogen werden, um die eine oder mehrere Komponenten befähigt zu machen, eine Veränderung der Reaktion des Kleidungsstücks auf die einfallende elektromagnetische Strahlung zu bewirken, wobei diese Veränderung der Reaktion nur bei einfallender Strahlung stattfindet, die außerhalb des sichtbaren Bereiches liegt, wodurch die codierte Sequenz bestimmt werden kann, um die Authentizität des textilen Kleidungsstücks festzustellen.

6. Verfahren nach Anspruch 5, bei dem die Behandlung chemisch, durch Wärme oder durch elektromagnetische Strahlung erfolgt.

7. Textiles Kleidungsstück, dessen Authentizität feststellbar ist, mit einer oder mehreren ausreichenden Komponente(n) (3), die an Strukturelementen in einer codierten Sequenz angeordnet sind und die die Reaktion des Kleidungsstücks auf einfallende elektromagnetische Strahlung verändern, wobei diese Änderung der Reaktion nur bei Strahlung stattfindet, die außerhalb des sichtbaren Bereiches liegt, wobei die codierte Sequenz bestimmt werden kann, um die Authentizität des textilen Kleidungsstücks festzustellen.

8. Verfahren zum Nachweisen der Authentizität eines textilen Kleidungsstücks nach Anspruch 7, das Verfahren umfassend: das Veranlassen des Einfallens einer elektromagnetischen Strahlung außerhalb des sichtbaren Bereiches auf wenigstens dem Teil des Kleidungsstücks, wo die Komponente oder jede Komponente angeordnet sein soll, und das Feststellen, ob die Reaktion auf die elektromagnetische Strahlung kennzeichnend für die eines authentischen Kleidungsstücks ist.

## Revendications

1. Procédé pour la production d'un vêtement à base textile, dont l'authenticité est susceptible d'être certifiée, le procédé comprenant l'étape d'appliquer à des éléments structurels (1) du vêtement à base textile, avant la fabrication du vêtement, suffisamment d'un ou plusieurs composants (3) disposés en une séquence codée, le(s)dit(s) un ou plusieurs composants provoque(nt) une altération de la réponse du vêtement à une radiation électromagnétique incidente, **caractérisé en ce que** ladite altération a lieu seulement en réponse à une radiation incidente à l'extérieur de la gamme visible, tandis que ladite séquence codée peut être déterminée afin de vérifier l'authenticité dudit vêtement à base textile.

2. Procédé selon la revendication 1, **caractérisé en ce que** la séquence codée est sous la forme d'un code barres ou équivalent de celui-ci.

3. Procédé selon l'une des revendications 1 ou 2, **caractérisé en ce que** la séquence codée est répétée le long au moins d'une partie du vêtement.

4. Procédé selon l'une des revendications précédentes, **caractérisé en ce que** le ou chacun des composants est choisi parmi un absorbeur d'infrarouge, un émetteur d'infrarouge, un matériau fluorescent ou un absorbeur de rayons ultraviolets.

5. Procédé de production d'un vêtement à base textile, dont l'authenticité est susceptible d'être vérifiée, le procédé comprenant l'étape d'appliquer à des éléments structurels (1) du vêtement à base textile, avant la fabrication du vêtement, suffisamment d'un ou plusieurs composants (3) disposés en une séquence codée, **caractérisé en ce que** ledit ou lesdits composants et/sont soumis à un traitement subséquent à la fabrication du vêtement, pour faire en sorte que ledit ou lesdits composants devienne(nt) apte(s) à provoquer une altération de la réponse du vêtement à une radiation électromagnétique incidente, et **en ce que** ladite altération a lieu seulement en réponse à une radiation incidente située en dehors de la gamme visible, tandis que ladite séquence codée peut être déterminée afin de s'assurer de l'authenticité dudit vêtement à base textile.

6. Procédé selon la revendication 5, **caractérisé en ce que** ledit traitement est chimique, thermique ou par radiation électromagnétique.

7. Vêtement à base textile dont l'authenticité est susceptible d'être vérifiée, le vêtement ayant, situé sur des éléments structurels (1) de celui-ci, suffisamment d'un ou plusieurs composés (3) disposés en une séquence codée, lequel ou lesquels composant(s) altère(nt) la réponse du vêtement à une radiation électromagnétique, tandis que ladite altération a lieu seulement en réponse à une radiation incidente se trouvant à l'extérieur de la gamme visible, tandis que ladite séquence codée peut être déterminée afin de s'assurer de l'authenticité dudit vêtement à base textile.

8. Procédé pour l'établissement de l'authenticité d'un vêtement à base de textile selon la revendication 7, le procédé comprenant l'étape de provoquer une radiation électromagnétique en dehors de la gamme visible pour frapper au moins une partie du vêtement où chaque composant est supposé être situé, et s'assurer que la réponse à ladite radiation électromagnétique est une indication de celle-ci correspondant à un vêtement authentique.
